# EUROPEAN PATENT APPLICATION

(11) **EP 3 477 564 A1**
(43) Date of publication of application: **01.05.2019**
(21) Application number: 18202828.2
(22) Date of filing: 26.10.2018
(51) Int. Cl.: G06Q 10/06

(54) **VEHICLE RIDE SHARE ASSIST SYSTEM**

(30) Priority: 31.10.2017 JP 2017209904
(71) Applicant: HONDA MOTOR CO., LTD., Tokyo 107-8556 (JP)
(72) Inventor: MATSUSHIMA, Kuniaki, Wako-shi, Saitama 351-0193 (JP); TANABE, Hiroyuki, Wako-shi, Saitama 351-0193 (JP); TAMANAHA, Ryusuke, Wako-shi, Saitama 351-0193 (JP); SAWADA, Yasuhiro, Wako-shi, Saitama 351-0193 (JP)
(74) Representative: Weickmann & Weickmann PartmbB

(57) **Abstract**

A vehicle ride share assist system comprises a plurality of user terminals (2), and a host server (4) connected to the user terminals via a network (3), wherein each of the user terminals includes an application input unit (15) configured to allow a corresponding user to enter a ride share application and to transmit the ride share application to the host server, and the host server includes an operation scheduling unit (24) configured to create an operation schedule based on the ride share applications and to select at least one driver in the operation schedule from the users who have transmitted the ride share applications.

## Description

### TECHNICAL FIELD

The present invention relates to a vehicle ride share assist system for assisting a plurality of users in sharing vehicle rides.

### BACKGROUND ART

The vehicle ride share assist system assists users to share a ride of a vehicle to a common destination or respective destinations. See JP2002-140399A, for instance. The ride share saves energy, reduces emission of CO₂, and mitigates traffic congestion.

In the ride share assist system disclosed in JP2002-140399A, each user applying for a ride share is required to indicate if the user will be a mere passenger or a driver in the proposed ride share. Depending on the circumstance, there may be too many or too few drivers so that some difficulty may arise in creating ride share groups. In particular, when the ride share is operated for the commuting of users to and from a workplace, the users may tend to avoid becoming a driver because serving as a driver is more burdensome than being a passenger, so that there may be a shortage of drivers.

### SUMMARY OF THE INVENTION

In view of such a problem of the prior art, a primary object of the present invention is to provide a ride share assist system which can prevent a shortage of drivers.

To accomplish such an object, the present invention provides a vehicle ride share assist system (1) comprising a plurality of user terminals (2), and a host server (4) connected to the user terminals via a network (3), wherein each of the user terminals includes an application input unit (15) configured to allow a corresponding user to enter a ride share application and to transmit the ride share application to the host server, and the host server includes an operation scheduling unit (24) configured to create an operation schedule based on the ride share applications and to select at least one driver in the operation schedule from the users who have transmitted the ride share applications.

Since the drivers are selected from the users who have applied for the ride share, the shortage and excess of the drivers can be avoided. Furthermore, the freedom in creating the ride share groups can be increased so that the operation schedule can be optimized.

Preferably, the host server is provided with a vehicle information managing unit (27) storing vehicle information on each of vehicles offered by the users for ride share, and the operation scheduling unit is configured to select the at least one driver based on the vehicle information. The vehicle information may include at least one of ownership, fuel mileage and occupant capacity of each of the vehicles.

Thereby, vehicles suitable for the ride share can be selected. For instance, the vehicles owned by an entity such as a business to which the users belong may be preferentially used. Also, the vehicles having better gas mileages or less CO₂ emissions may be preferentially used.

Preferably, the host server is provided with a user information managing unit (26) storing user information on each of the users, and the operation scheduling unit is configured to select the at least one driver based on the user information.

Thereby, the drivers can be selected from those having favorable traits or attributes (such as driving skill) as drivers so that the safety and comfort of the ride share can be enhanced.

Preferably, the user information includes a number of incidences of each user serving as a driver during a prescribed past time period, and the operation scheduling unit is configured to select driver candidates in such a manner that an uneveness in the numbers of incidences of serving as a driver among the users is minimized, and to select the at least one driver from the driver candidates.

Thereby, the duty to serve as a driver can be evenly distributed among the users so that the operation schedule can be executed in a fair manner.

Preferably, the host server is provided with a vehicle information managing unit (27) storing vehicle information on each of vehicles offered by the users for ride share, and the operation scheduling unit is configured to select the at least one driver from the driver candidates based on the vehicle information.

Thereby, the vehicles having favorable traits or attributes may be preferentially selected as the vehicles to be used so that the cost and/or environmental considerations can be favorably taken into account in selecting the vehicles to be used.

Preferably, the user information includes driving skill, and the operation scheduling unit is configured to select the at least one driver from the driver candidates according to the driving skill.

Thereby, the vehicles can be operated by competent drivers so that the comfort and safety of the ride share can be enhanced.

Preferably, the operation scheduling unit is configured to create a plurality of ride share groups from the users who have transmitted the ride share applications, and select at least one driver candidate for each of the ride share groups.

Thereby, the driver for each ride share group can be selected in proper manner.

Preferably, the vehicle ride share assist system is configured to assist the users to travel to a specific facility.

Since the users share a common destination or a common point of departure, the ride share can be operated in an efficient manner.

Preferably, the vehicle ride share assist system is configured to assist the users to commute to a facility of an organization to which the users belong.

The users share a common destination in commuting to the facility in the morning, and share a common point of departure in commuting from the facility in the evening so that the ride share can be operated in an efficient manner.

Preferably, the operation scheduling unit is configured to create a plurality of patterns of operation schedules such that in each of the patterns the users having transmitted the ride share applications are grouped into a plurality of ride share groups and at least one driver candidate is assigned to each of the ride share groups, to compute evaluation points for each operation schedule in accordance with a plurality of evaluation criteria, to total the evaluation points for each pattern after multiplying the evaluation points by respective coefficients, and to select the at least one driver from the driver candidates included in one of the operation schedules having a highest total of the evaluation values multiplied by the respective coefficients, and wherein each of the coefficients can be changed by a system administrator.

Thereby, an operating schedule suitable for the desire and need of the organization using the vehicle ride share assist system can be created. For example, the vehicle ride share assist system can create an operation schedule to minimize the number of vehicles used in the ride share or to reduce CO₂ emission amount generated from the vehicles used in the ride share.

Preferably, the host server further comprises a vehicle information managing unit (27) storing vehicle information on each of vehicles offered by the users for ride share, and a user information managing unit (26) storing user information on each of the users.

Thereby, the host server can select the vehicles and the drivers in an optimum fashion according to the vehicle information and the user information.

According to a particularly preferred embodiment of the present invention, the operation scheduling unit is configured to create a plurality of patterns of group candidates from the users who have transmitted the ride share applications, each group candidate including a driver and zero or more passengers, and to evaluate and select an optimum pattern from the patterns of group candidates according to a prescribed criterion.

Thereby, the groups each sharing a vehicle can be created in an optimum manner so that the ride share can be operated in a most favorable manner. In this case, it is preferred if the operation scheduling unit is further configured to classify the users who have applied for the ride share either as driver candidates and passenger candidates, so that the passengers are selected from the driver candidates and the passenger candidates, and the drivers are selected from the driver candidates.

According to another embodiment of the present invention, the operation scheduling unit is configured to select drivers from the users who have transmitted the ride share applications according to the user information stored in the user information managing unit, to select a vehicle for each selected driver, to create a plurality of patterns of group candidates, each group candidate including a driver and zero or more passengers, and to evaluate and select an optimum pattern from the patterns of group candidates according to a prescribed criterion.

In this case also, the groups each sharing a vehicle can be created in an optimum manner so that the ride share can be operated in a most favorable manner. Further, because the drivers for the ride share are selected first, the number of group candidates in each of the patterns to be evaluated can be limited, and therefore, a computational load of the operation scheduling unit (host server) can be reduced.

According to yet another embodiment of the present invention, the operation scheduling unit is configured to select vehicles to be used for ride share according to the vehicle information stored in the vehicle information managing unit, to select a driver for each selected vehicle, to create a plurality of patterns of group candidates, each group candidate including a driver and zero or more passengers, and to evaluate and select an optimum pattern from the patterns of group candidates according to a prescribed criterion.

In these cases also, the groups each sharing a vehicle can be created in an optimum manner so that the ride share can be operated in a most favorable manner. Further, because the vehicles to be used in the ride share are selected first, the number of group candidates in each of the patterns to be evaluated can be limited, and therefore, a computational load of the operation scheduling unit (host server) can be reduced.

Thus, an embodiment of the present invention provides a ride share assist system which can prevent a shortage of drivers.

### BRIEF DESCRIPTION OF THE DRAWING(S)

Figure 1 is a block diagram of a vehicle ride share assist system according to an embodiment of the present invention;
Figure 2 is a flowchart showing an overall process flow of the vehicle ride share assist system;
Figure 3 is a flowchart showing a flow of a driver candidate selection process;
Figure 4 is a flowchart showing a flow of an operation scheduling process according to a first embodiment;
Figure 5 is a flowchart showing a flow of an operation scheduling process according to a second embodiment;
Figure 6 is a flowchart showing a flow of an operation scheduling process according to a third embodiment; and
Figure 7 is a flowchart showing a flow of a driver candidate selection process according to modified embodiment of the present invention.

### DETAILED DESCRIPTION OF THE INVENTION

In the following, a vehicle ride share assist system 1 according to an embodiment of the present invention is described with reference to the appended drawings. This vehicle ride share assist system 1 is, not exclusively, suited to provide a transportation service to a group of people (users) belonging to a particular organization such as a business, a government office, a sports club, a nursing home and a shopping center. Typically, the system provides a vehicle ride share service to a workplace or any other facility from the homes of the users, and back to their homes from the workplace or the like.

The members of the ride share or the users of the vehicle ride share assist system 1 according to the present invention share a plurality of vehicles. Such vehicles may be owned by an organization such as a business to which the users belong, may be owned by some of the members of the ride share (users), or may be a mixture of such vehicles. These vehicles are registered for use by the vehicle ride share assist system 1, and are appropriately assigned unique identification numbers. Also, in the vehicle ride share assist system 1, all users are assigned unique user identification numbers.

### (Components of Vehicle Ride Share System)

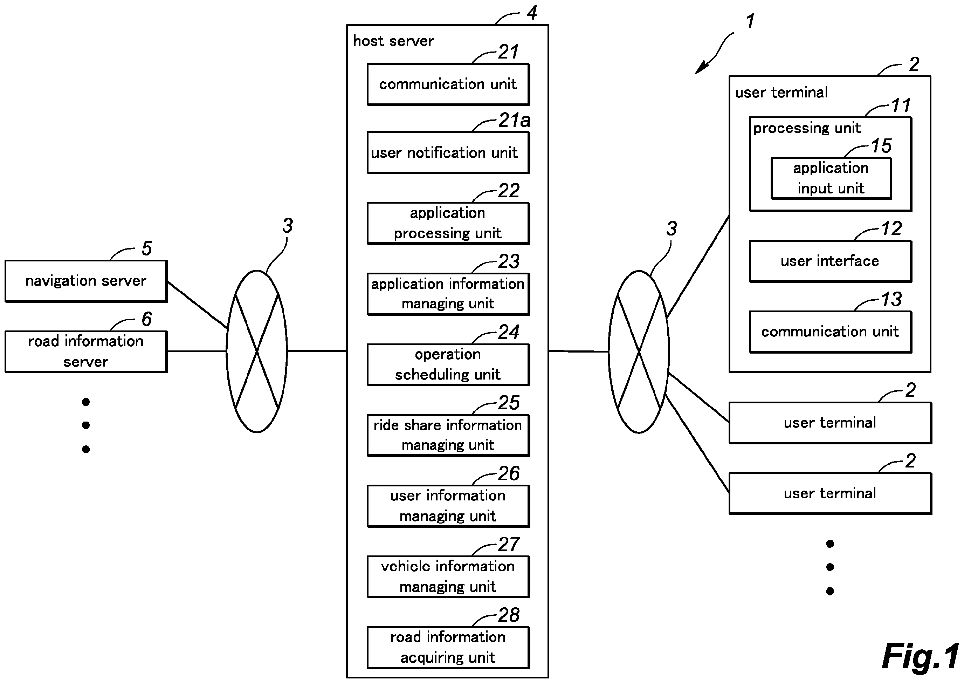

As shown in Figure 1, the vehicle ride share assist system 1 includes a plurality of user terminals 2 and a host server 4 connected to the respective user terminals 2 via a network 3. Each user terminal 2 is carried by the corresponding user, and the host server 4 is provided in a fixed location such as a building of a business or the like which operates the vehicle ride share assist system 1. The network 3 may consist of any wireless communication such as the Internet.

Each user terminal 2 includes a processing unit 11 for executing an application software, a user interface 12 for displaying an input screen for receiving an input operation from the user as well as message and information screens for providing information to the user, and a communication unit 13 for communicating with the host server 4 via the network 3. The user terminal 2 may consist of a smartphone, a tablet PC, a cell phone, a PDA, or the like. The user terminal 2 operates according to the application software executed by the processing unit 11, and displays various images on the user interface 12.The processing unit 11 of the user terminal 2 includes an application input unit 15 for allowing the corresponding user to enter or submit an application for a ride. The application input unit 15 requires the user to input the user identification number, the desired boarding point, the desired destination, the desired time of boarding, and the identification number of a sharable vehicle(s), if any. The sharable vehicle(s) is one or more vehicles that can be driven by the user from the desired boarding point in the ride share that the user applied for, and may be owned by this user or may be selected from a fleet of vehicles provided by the organization. In the latter case, the user will be required to obtain a key or an authentication card to be able to operate the vehicle, and the vehicle is required to be parked near the user's desired boarding point.

The host server 4 includes a communication unit 21 for communicating with the user terminal 2 via the network 3, a user notification unit 21a for notifying information prepared by various parts of the host server 4 to the users via the communication unit 21, an application processing unit 22 for accepting ride applications from the users, an application information managing unit 23 for storing and managing application information of the users who desire to share a ride, an operation scheduling unit 24 for creating a plurality of groups of users from those who have applied for a ride share, determining a route for each group by using an external navigation server 5, and scheduling the operation of the vehicles, a ride share information managing unit 25 for storing and managing information on the ride share groups and the overall operation of the vehicles, a user information managing unit 26 for storing and managing user information of the registered users, a vehicle information managing unit 27 for storing and managing information on the registered vehicles, and a road information acquiring unit 28 for acquiring information on the condition of the roads by using an external road information server 6.

The user information managing unit 26 stores user information of each user, such as the user identification number, the user's name, the address, the driving skill level, the driver's license expiration date, the traffic violation history, the number of traffic violation points, the past driver duty performance records, the identification number of the vehicle provided by the user (a private vehicle registered for use in the ride share), the self-declared physical condition (health condition), the medication situation, the ride share history, etc. Further, the user information managing unit 26 stores the conditions of the drivers that are required to be satisfied for the users to be selected as the drivers of the ride share.

The driving skill level represents the driving skill of the user and may be graded with a scale of 1 to 5, for instance. The driving skill level may be based on the self-declaration, the kinds of the license, the past travel distance, or the skill level certified by a prescribed organization. For instance, FIA (International Automobile Federation), JAF (Japan Automobile Federation) and other organizations issue such licenses. The past driver duty performance records include all of the dates and frequencies of the incidences of the user performing the duty as the driver. From the dates of the incidences of performing the duty of the driver, the numbers of incidences of serving as a driver during a prescribed past time period can be obtained. The user information, such as the user's name, address, driving skill, presence/absence of a private vehicle registered for use in the ride share, can be updated as required from the user terminals 2. Also, each vehicle owned by the organization may be provided with a system for detecting or monitoring the incidences of irregular behavior, sudden braking and sudden start-off when the user is driving the vehicle, and for estimating the driving skill of the user based on the detected incidences, such that the driving skill estimated by the system may be recorded as the driving skill of the user.

The vehicle information managing unit 27 stores vehicle information for each of the vehicles registered as vehicles that can be used for ride share. The vehicle information includes, for example, the vehicle identification number, the owner, the vehicle type, the occupant capacity, the fuel mileage, the CO₂ emission amount per unit distance traveled, the vehicle inspection expiration date, the statutory inspection history, the statutory inspection results, the past use history, etc. Further, the vehicle information managing unit 27 stores the conditions of the vehicle that are required for the vehicles to be used for the ride share.

The application information managing unit 23 receives application information from the application processing unit 22, and stores the received application information. The application information includes the user identification number, the desired boarding point, the desired destination, the desired boarding time, the desired arrival time, and, if applicable, the identification number of the sharable vehicle(s).

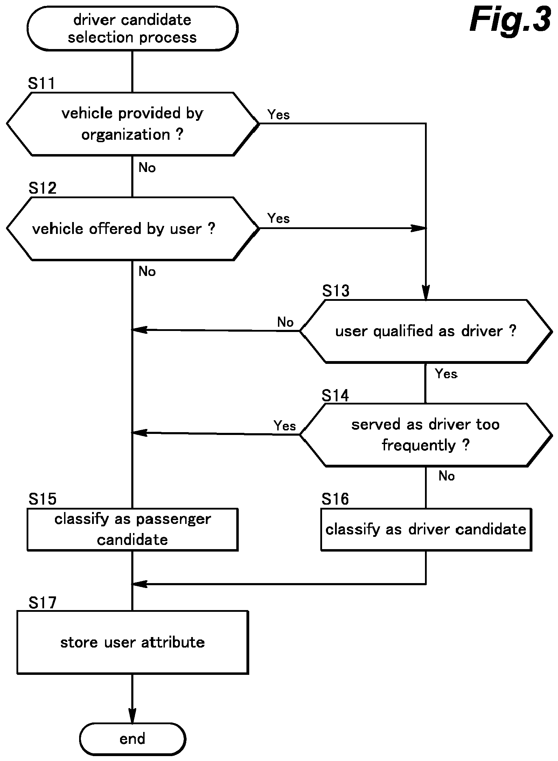

The operation scheduling unit 24 classifies the users who have applied for the ride share either as driver candidates and passenger candidates (who are not expected to drive the vehicle) by executing a driver candidate selection process (which will be discussed later with reference to Figure 3) according to the application information stored in the application information managing unit 23. The information indicating whether the user is classified as a driver candidate or a passenger candidate will be referred to as user attribute information.

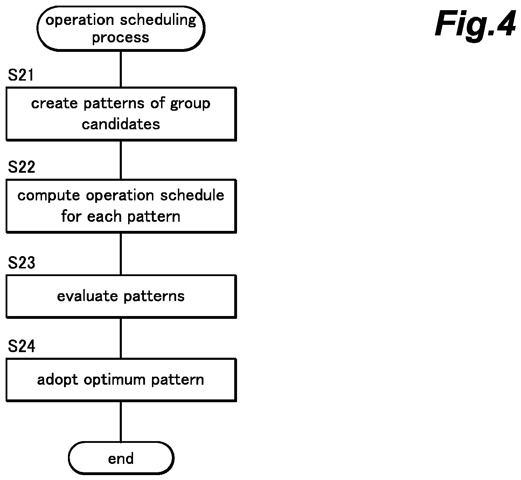

The operation scheduling unit 24 also executes an operation scheduling process (which will be described later with reference to Figures 4 to 6) to create an operation schedule according to at least the application information and the user attribute information. Specifically, the operation scheduling unit 24 creates a plurality of groups of users (ride share groups) from those who have applied for the ride share, and designates the driver and the vehicle to be used for each ride share group. The operation scheduling unit 24 further determines the route to be taken for each group, and the boarding point (pick up point), the destination, the boarding time (pick up time), and the expected destination arrival time for each user.

The ride share information managing unit 25 stores the operation schedule information created by the operation scheduling unit 24. The operation schedule information is created for each ride share group, and includes the identification number of each group, the identification numbers of the users in each group, the identification number of the user serving as the drive for each group, the identification number of the vehicle to be used by each group, and the boarding point, the destination, the boarding time and the expected destination arrival time for each user.

The notification unit 21a creates a user operation schedule for each user from the operation schedule information created by the operation scheduling unit 24 and stored in the ride share information managing unit 25, and transmits the corresponding user operation schedule information to the user terminal 2 via the communication unit 21. The user operation schedule information may include the identification number of the user, the identification number of the group to which the user belongs, the identification number of the vehicle to be used, and driver/passenger information, in addition to the boarding point, the destination, the boarding time and the expected destination arrival time. The driver/passenger information is an indication if the user is a driver or a passenger. The user operation schedule information transmitted to the user terminal 2 is displayed on the user interface 12 thereof.

### (Ride Share Assist Process)

The ride share assist process executed by the vehicle ride share assist system 1 is described in the following. The vehicle ride share assist system 1 sets time slots during which the ride share takes place for each day or certain days of each week, and executes the ride share assist process for each time slot. For instance, the time slots may include a morning commuting time slot (from 6 to 10 am) and an evening commuting time slot (from 4 to 8 pm). Alternatively, the ride share may take place continuously over the entire day or a part of each day, and in such a case the corresponding time slots may be set continuously. The vehicle ride share assist system 1 may be configured to execute multiple ride share assist processes simultaneously in correspondence to the multiple time slots.

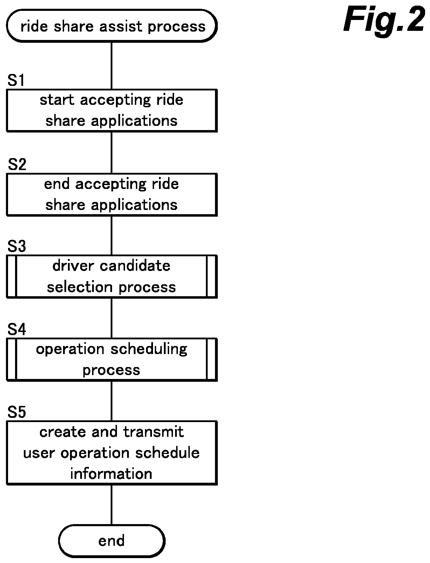

Figure 2 is a flowchart showing the ride share assist process for a single time slot. Initially, in step S1, the application processing unit 22 of the host server 4 starts accepting ride share applications. The time period for accepting ride share application is set to start from some time before the start time point of the given time slot. For instance, if the time slot is defined as the time period from 6 to 10 a.m. (morning commuting time slot), the application processing unit 22 may start accepting ride share applications from three days before at 6 a.m.

At the same time as starting accepting ride share applications, the application processing unit 22 transmits a start application signal to each user terminal 2, and in response thereto, the application input unit 15 of the user terminal 2 enables input of a ride share application for the corresponding time slot. Thereby, the user of the user terminal 2 is allowed to enter a ride share application for the time slot by use of the user terminal 2. The application input unit 15 requires the user to enter application information which may include a user identification number, a desired boarding point, a desired destination, a desired boarding time, and, if applicable, the vehicle identification number of the sharable vehicle(s). Since the data such as the user identification number, the desired boarding point, the desired destination, and the vehicle identification number of the user's private vehicle registered for use in the ride share may be retrieved automatically from the data stored in the user terminal 2, the user information managing unit 26, and the vehicle information managing unit 27, it may be arranged such that the user is not required to enter the corresponding data. The application information entered by the user is transmitted to the host server 4 to be stored in the application information managing unit 23.

Then, in step S2, the application processing unit 22 stops receiving ride share applications after a prescribed time period from the start of accepting ride share applications and before the start time point of the time slot. For instance, if the time slot is defined as the time period from 6 to 10 a.m. (morning commuting time slot), the application processing unit 22 may stop accepting ride share applications on the preceding day at 6 p.m. At the same time, the application processing unit 22 transmits an end application signal to each user terminal 2, and in response thereto, the application input unit 15 of the user terminal 2 stops receiving a ride share application for the corresponding time slot. Thereby, the user is prevented from entering a ride share application for the time slot thereafter.

In step S3, the operation scheduling unit 24 starts a driver candidate selection process according to the application information submitted by the users. The driver candidate selection process selects and designates driver candidates from the users having applied for the ride share, and the remaining users are designated as passenger candidates (users who will not drive). Details of the driver candidate selection process will be described later. The operation scheduling unit 24 stores user attribute information indicating if each user is a driver candidate or a passenger candidate in the application information managing unit 23.

In step S4, the operation scheduling unit 24 executes an operation scheduling process (see Figures 4 to 6) according to at least the application information and the user attribute information. The operation scheduling process creates a plurality of ride share groups each including a plurality of users, and determines for each of the ride share groups the driver, the vehicle to be used, the route to be taken, the boarding point, the boarding time, the destination, and the expected destination arrival time of each user in the ride share group. The operation scheduling unit 24 stores such information in the ride share information managing unit 25 as operation schedule information.

Next, in step S5, the user notification unit 21a creates user operation schedule information which may be considered as a part of the operation schedule information (which is stored in the ride share information managing unit 25) relevant to each particular user, and transmits the user operation schedule information to each user terminal 2 (or the communication unit 13 of each user terminal 2) via the communication unit 21. As a result, the user can confirm his / her user schedule information with the user terminal 2.

### (Driver Candidate Selection Process)

Figure 3 is a flowchart showing a driver candidate selection process. The driver candidate selection process is executed by the operation scheduling unit 24 of the host server 4. The driver candidate selection process is executed with regard to all of the users who have applied for the ride share. In the driver candidate selection process, first of all, in step S11, it is determined based on the application information if the user is using a vehicle owned by the organization. This determination is made by determining if the identification number of the sharable vehicle(s) included in the application information matches the identification number of one of the fleet of registered vehicles owned by the organization whose vehicle information is stored in the vehicle information managing unit 27. If the determination result at step S1 is Yes, the process proceeds to step S13. Otherwise (No in step S11), the process advances to step S12.

In step S12, it is determined based on the application information if the user is offering a vehicle that is owned by the user for the ride share. This determination is made by determining if the identification number of the vehicle that can be shared included in the application information matches the identification number of one of the registered private vehicles whose vehicle information is stored in the vehicle information managing unit 27. If the determination result at step S12 is Yes, the process proceeds to step S13. Otherwise (No in step S12), the process advances to step S15.

In step S13, based on the user information stored in the user information managing unit 26, it is determined if the user is qualified as the driver. This determination is made on the basis of, for example, the driving skill level, the license information, the medication situation, and the health condition of the user. For example, if the license has expired according to the expiration date contained in the license information, it is determined that the user is not qualified as the driver. If the determination result at step S13 is Yes, the process proceeds to step S14. Otherwise (No in step S13), the process advances to step S15.

In step S14, it is determined if the number of incidences of the user serving as a driver during a prescribed past time period is greater than those of other users. For instance, the average value of the numbers of incidences of the all users serving as a driver during the prescribed past time period is computed, and if the number of incidences of the particular user during the prescribed past time period is greater than this average value by more than a prescribed value, this user may be considered as having served as a driver too frequently. In another method of computation, a deviation value may be used for determining whether the user has served as a driver too often in the past. If it is determined that the particular user has served as a driver too frequently (Yes in step ST14), the process advances to step S15. Otherwise (No in step S14), the process proceeds to step S16.

In step S15, the user is classified as a passenger candidate. In step S16, the user is classified as a driver candidate. In step S17, the application information managing unit 23 stores the attribute of each user (if the user is a passenger candidate or a driver candidate).

### (Operation Scheduling Process: First Embodiment)

Figure 4 is a flowchart showing a first embodiment of the operation scheduling process. The operation scheduling process is executed by the operation scheduling unit 24 of the host server 4. In the operation scheduling process, first of all, in step S21, a plurality of patterns of group candidates are created, each pattern covering all of the driver candidates and the passenger candidates. Each group candidate includes one driver and zero or more passengers. The driver is selected from the driver candidates, and the passengers are selected from the driver candidates and the passenger candidates. In each pattern of group candidates, the group candidates should be defined such that each of the driver candidates and the passenger candidates is included in one of the group candidates. Namely, each pattern should cover all of the users who applied for the ride share. The maximum number of passengers which each group candidate may include is equal to the capacity of occupants of the vehicle assigned to the group candidate minus one. The vehicle to be used by each group candidate is selected from the sharable vehicle(s) offered by the user selected as the driver (which may be either owned by the organization or by the driver).

In step S22, the route, the route length, the boarding time and the estimated arrival time of each user (who may be either a driver or a passenger), and the expected operation time or duration of the entire trip (difference between the expected arrival time and the boarding time of the driver) are computed for each of the group candidates included in each pattern.

In step S23, each pattern of group candidates is evaluated, and awarded an evaluation point according to prescribed evaluation criteria. The evaluation criteria may include the sum of the route lengths of the entire group candidates, the sum of the operation times of the entire group candidates, the sum of the differences between the desired boarding time and the desired arrival time for all of the users, the number of vehicles to be used for the ride share, the total CO₂ emission amount, and the ratio of the vehicles provided by the organization, for example. Evaluation points are higher as the sum of the route lengths of the entire group candidates gets smaller, as the sum of the operation times of the entire group candidates gets smaller, as the sum of the differences between the desired boarding time and the desired arrival time for all of the users gets smaller, as the number of vehicles to be used for the ride share gets smaller, as the estimated total CO₂ emission amount gets smaller, and as the ratio of the vehicles provided by the organization gets greater. In the actual evaluation process, for each pattern of group candidates, evaluation points are computed in accordance with a plurality of criteria, and the computed evaluation points are totaled after being weighted (or multiplied by respective coefficients). The coefficients can be changed by a system administrator as appropriate depending on the desire and need of the organization or the like using the vehicle ride share assist system 1. By changing the coefficients, it is possible to choose the evaluation criterion or criteria to be given a high priority. For instance, when reducing traffic congestion is given a high priority, the number of vehicles to be used for the ride share may be weighted more than the other criteria (namely, the coefficient corresponding to the number of vehicles to be used for the ride share may be made greater than the coefficients corresponding to the other criteria). Similarly, when reducing CO₂ emission amount is given a high priority, the estimated total CO₂ emission amount may be weighted more than the other criteria (namely, the coefficient corresponding to the estimated total CO₂ emission amount may be made greater than the coefficients corresponding to the other criteria). If any particular criterion is to be disregarded, such a criterion may be omitted altogether by making the coefficient corresponding to the criterion zero.

In step S24, a pattern scoring the highest total of weighted evaluation points (optimum pattern) among all of the candidate evaluated patterns is selected as an adopted pattern. Based on the adopted pattern, x, the drivers, the vehicles to be used, the passengers for each vehicle, the route to be taken by each vehicle, the route length of each vehicle, the boarding time and the expected arrival time of each user (who may be a driver or a passenger), and the expected operation time of each vehicle are determined. Namely, an operation schedule is created.

### (Operation Scheduling Process; Second Embodiment)

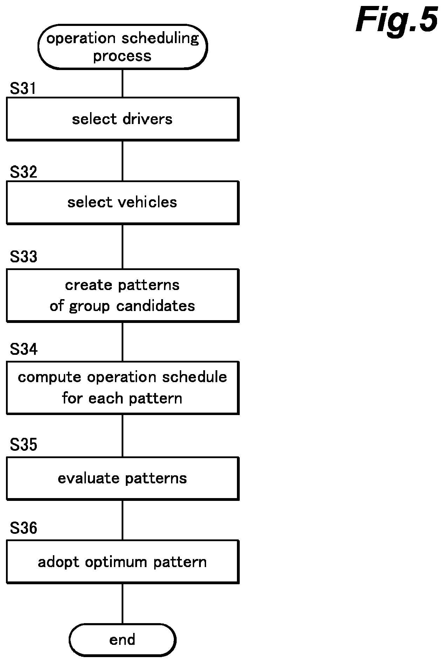

Figure 5 is a flowchart showing a second embodiment of the operation scheduling process. The operation scheduling unit 24 of the host server 4 executes the second embodiment of the operation scheduling process, in place of the first embodiment. In this operation scheduling process, first of all, in step S31, a plurality of drivers are selected from all of the driver candidates. More specifically, all of the driver candidates are evaluated, and those scoring higher evaluation points are selected as the drivers. The evaluation is based on prescribed driver evaluation criteria. The driver evaluation criteria may include the driving skill, user's condition, etc. For example, the higher the driving skill is, the higher the evaluation points are, and the more likely the user will be selected as the driver. The passenger candidates and the driver candidates not selected as the drivers (namely, the users who are not selected as the drivers) are selected as the passengers.

In step S32, based on the sharable vehicle(s) included in the application information of each driver, the vehicle to be used for the ride share related to the driver is selected. Specifically, the sharable vehicle(s) offered by each user selected as the driver is evaluated and the vehicle scoring the highest evaluation point is selected as the vehicle to be used. The evaluation is made according to prescribed vehicle evaluation criteria. The vehicle evaluation criteria may include the attribute of the vehicle (owned by the user or by the organization), the occupant capacity, and the CO₂ emission amount per unit distance traveled. For instance, a vehicle owned by the organization is given a higher evaluation point than a vehicle owned by a user, a vehicle having a greater occupant capacity is given a higher evaluation point, a vehicle having a lower CO₂ emission amount per unit distance traveled is given a higher evaluation point, and vehicles given higher evaluation points are more likely to be selected as vehicles used in the ride share. When the user selected as the driver offers only a single sharable vehicle, the evaluation is not performed, and the offered sharable vehicle is selected as the vehicle to be used in the ride share.

In step S33, a plurality of patterns of group candidates are created, such that each group candidate includes one of the selected drivers and zero or more passengers. In other words, a plurality of patterns of distributing the passengers to different group candidates are created. In each pattern of group candidates, the group candidates should be defined such that each of the driver candidates and the passenger candidates is included in one of the group candidates. Namely, each pattern should cover all of the users who applied for the ride share. The maximum number of passengers which each group candidate may include is equal to the capacity of occupants of the vehicle assigned to the group candidate minus one.

In step S34, the route, the route length, the boarding time and the expected arrival time of each user (who may be either a driver or a passenger), and the expected operation time (difference between the expected arrival time and the boarding time of the driver) are computed for each of the group candidates included in each pattern.

In step S35, each pattern of group candidates is evaluated, and is given evaluation points. The evaluation may be made in a similar manner as in step S23.

In step S36, the pattern scoring the highest total of weighted evaluation points (optimum pattern) among all of the evaluated patterns is selected as an adopted pattern. Based on the adopted pattern, the drivers, the vehicle to be used, the passengers for each vehicle, the route to be taken by each vehicle, the route length of each vehicle, the boarding time and the expected arrival time for each user (who may be a driver or a passenger), and the operation time of each vehicle are determined. Namely, an operation schedule is created.

### (Operation Scheduling Process; Third Embodiment)

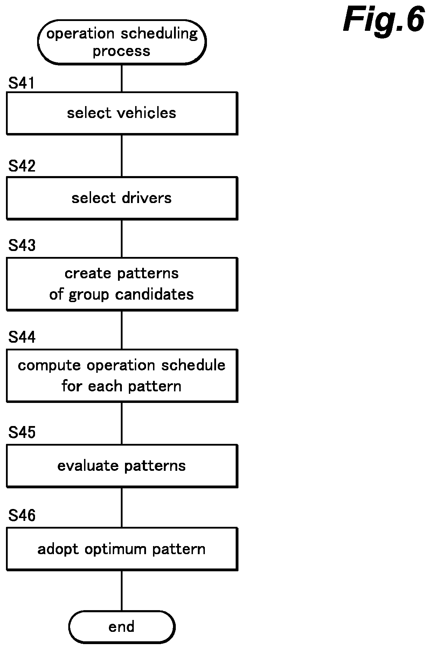

Figure 6 is a flowchart showing a third embodiment of the operation scheduling process. The operation scheduling unit 24 of the host server 4 executes the third embodiment of the operation scheduling process, in place of the first embodiment or the second embodiment. In this operation scheduling process, first of all, in step S41, a plurality of vehicle candidates for the ride share are selected from all of the available vehicles (namely, from all of the sharable vehicles included in the ride share applications). More specifically, all of the sharable vehicles are evaluated according to prescribed vehicle evaluation criteria, and those scoring higher evaluation points are selected as the vehicle candidates for the ride share. The vehicle evaluation criteria may be the same as used in step S32.

In step S42, based on the selected vehicle candidates and the driver candidates, the vehicles to be used for the ride share and the drivers of the vehicles are selected. Specifically, it is determined for vehicle candidate whether a user offering the vehicle candidate as a sharable vehicle is one of the driver candidates, and if yes, the vehicle candidate is selected as a vehicle to be used for the ride share and this user is selected as the driver of the vehicle. The passenger candidates and the driver candidates not selected as the drivers are selected as passengers.

In step S43, a plurality of patterns of group candidates are created, such that each group candidate includes one of the selected drivers and zero or more passengers. In step S44, the route, the route length, the boarding time and the expected arrival time of each user (who may be either a driver or a passenger), and the expected operation time (difference between the expected arrival time and the boarding time of the driver) are computed for each of the group candidates included in each pattern. In step S45, each pattern of group candidates is evaluated, and is given evaluation points. In step S46, the pattern scoring the highest total of weighted evaluation points (optimum pattern) among all of the evaluated patterns is selected as an adopted pattern. The processes in steps S43, S44, S45, and S46 are the same or similar to those in steps S33, S34, S35, and S36, respectively.

The advantages of the vehicle ride share assist system 1 described above are discussed in the following. In the vehicle ride share assist system 1, since the host server 4 selects the drivers from the users applying for the ride share, the necessary number of drivers can be ensured at all times. Also, the host server 4 is enabled to create ride share groups from all possible combinations of the users so that the operation schedule can be optimized.

The operation scheduling unit 24 may select the vehicles to be used for the ride share according to the vehicle information so that the ride share can be operated by using the most suitable vehicles. For instance, the vehicles owned by the organization may be preferentially used. Also, by preferentially using vehicles having high gas mileage, the overall CO₂ emission amount can be minimized.

The operation scheduling unit 24 may select the drivers according to the user information so that those skilled in driving are preferentially selected as the drivers, and the safety and the comfort of the ride share are enhanced. By selecting driver candidates taking into account the frequencies of past incidences of serving as a driver, the duty to drive can be evenly shared by the users as much as possible. In other words, an uneveness in the numbers of incidences of serving as a driver among the users is minimized. This contributes to reducing the sense of unfairness among the users, and thereby prompts the users to participate in the ride share.

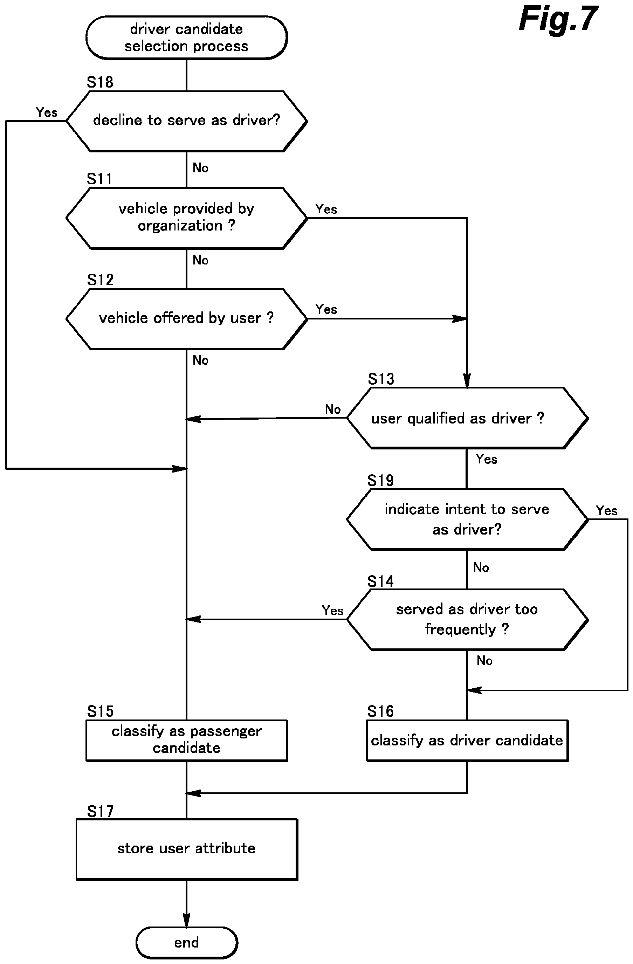

Although the present invention has been described in terms of specific embodiments, the present invention is not limited by such embodiments, but the various elements of the present invention can be modified and substituted within the scope of the present invention defined by the appended claims. For example, the application input unit 15 may be configured to acquire information on the intent to serve as a driver or intent to decline to serve as a driver as a part of the information required at the time of applying for the ride share. The intent to serve as a driver or to decline to serve as a driver may be entered by ticking or marking a box or the like displayed on the application input screen. In this case, as shown in Figure 7, steps S18 and S19 may be added to the driver candidate selection process. In step S18 which is executed at the beginning of the driver candidate selection process, it is determined if the user declines to serve as a driver. If the user declines to serve as a driver (Yes in step S18), steps S1 and S12 are bypassed, and the process advances to step S15 where the user is classified as a passenger candidate. If the user does not decline to serve as a driver in step S18 (No in step S18), the process proceeds to step S11. In step S19 which follows step S13, if the user indicates an intent to serve as a driver (Yes in step S19), step S14 is bypassed, and the process advances to step S16 where the user is classified as a driver candidate.

In the driver candidate selection process of Figure 3, in order for the user to be a driver candidate, it was necessary for the user to have a sharable vehicle (S11 and S12). But, in an alternate embodiment, the user may not be required to have a sharable vehicle to be classified as a driver candidate. When a user not having a sharable vehicle is selected as a driver, the vehicle ride share assist system 1 instructs the user to choose and prepare a vehicle selected from the vehicles belonging to the organization before the scheduled boarding time. In such a case, it is also possible to arrange such that the vehicle ride share assist system 1 chooses and reserve the vehicle to be used by the user on behalf of the user.

In addition to the vehicle ownership (whether the vehicle is owned by the organization or by the users), the occupant capacity, the CO₂ emission amounts per unit distance traveled, etc., the vehicle evaluation criteria may include the presence or absence of safety equipment, the capability of the vehicle to carry a wheelchair and travel suitcases, the tire type, the presence or absence of tire chains, the remaining amount of fuel, etc.

The driver evaluation criteria may include the physical condition (including medication or consumption of other substances (such as alcohol) that may affect the driving capability), the conditions of the license (such as an automatic car only license), the past traffic violation records, the driving experience, the frequency of cancellations of ride share applications, the availability of a parking space for the vehicle owned by the organize, etc.

A vehicle ride share assist system comprises a plurality of user terminals (2), and a host server (4) connected to the user terminals via a network (3), wherein each of the user terminals includes an application input unit (15) configured to allow a corresponding user to enter a ride share application and to transmit the ride share application to the host server, and the host server includes an operation scheduling unit (24) configured to create an operation schedule based on the ride share applications and to select at least one driver in the operation schedule from the users who have transmitted the ride share applications.

## Claims

1. A vehicle ride share assist system (1) comprising a plurality of user terminals (2), and a host server (4) connected to the user terminals via a network (3), wherein
each of the user terminals includes an application input unit (15) configured to allow a corresponding user to enter a ride share application and to transmit the ride share application to the host server, and
the host server includes an operation scheduling unit (24) configured to create an operation schedule based on the ride share applications and to select at least one driver in the operation schedule from the users who have transmitted the ride share applications.

2. The vehicle ride share assist system according to claim 1, wherein the host server is provided with a vehicle information managing unit (27) storing vehicle information on each of vehicles offered by the users for ride share, and the operation scheduling unit is configured to select the at least one driver based on the vehicle information.

3. The vehicle ride share assist system according to claim 2, wherein the vehicle information includes at least one of ownership, fuel mileage and occupant capacity of each of the vehicles.

4. The vehicle ride share assist system according to claim 1, wherein the host server is provided with a user information managing unit (26) storing user information on each of the users, and the operation scheduling unit is configured to select the at least one driver based on the user information.

5. The vehicle ride share assist system according to claim 4, wherein the user information includes a number of incidences of each user serving as a driver during a prescribed past time period, and the operation scheduling unit is configured to select driver candidates in such a manner that an uneveness in the numbers of incidences of serving as a driver among the users is minimized, and to select the at least one driver from the driver candidates.

6. The vehicle ride share assist system according to claim 5, wherein the host server is provided with a vehicle information managing unit (27) storing vehicle information on each of vehicles offered by the users for ride share, and the operation scheduling unit is configured to select the at least one driver from the driver candidates based on the vehicle information.

7. The vehicle ride share assist system according to claim 6, wherein the user information includes driving skill, and the operation scheduling unit is configured to select the at least one driver from the driver candidates according to the driving skill.

8. The vehicle ride share assist system according to claim 5, wherein the operation scheduling unit is configured to create a plurality of ride share groups from the users who have transmitted the ride share applications, and select at least one driver candidate for each of the ride share groups.

9. The vehicle ride share assist system according to any one of claims 1 to 8, wherein the vehicle ride share assist system is configured to assist the users to travel to a specific facility.

10. The vehicle ride share assist system according to any one of claims 1 to 8, wherein the vehicle ride share assist system is configured to assist the users to commute to a facility of an organization to which the users belong.

11. The vehicle ride share assist system according to claim 1, wherein the operation scheduling unit is configured to create a plurality of patterns of operation schedules such that in each of the patterns the users having transmitted the ride share applications are grouped into a plurality of ride share groups and at least one driver candidate is assigned to each of the ride share groups, to compute evaluation points for each operation schedule in accordance with a plurality of evaluation criteria, to total the evaluation points for each pattern after multiplying the evaluation points by respective coefficients, and to select the at least one driver from the driver candidates included in one of the operation schedules having a highest total of the evaluation values multiplied by the respective coefficients, and wherein each of the coefficients can be changed by a system administrator.

12. The vehicle ride share assist system according to claim 1, wherein the host server further comprises a vehicle information managing unit (27) storing vehicle information on each of vehicles offered by the users for ride share, and a user information managing unit (26) storing user information on each of the users.

13. The vehicle ride share assist system according to claim 12, wherein the operation scheduling unit is configured to create a plurality of patterns of group candidates from the users who have transmitted the ride share applications, each group candidate including a driver and zero or more passengers, and to evaluate and select an optimum pattern from the patterns of group candidates according to a prescribed criterion.

14. The vehicle ride share assist system according to claim 12, wherein the operation scheduling unit is configured to select drivers from the users who have transmitted the ride share applications according to the user information stored in the user information managing unit, to select a vehicle for each selected driver, to create a plurality of patterns of group candidates, each group candidate including a driver and zero or more passengers, and to evaluate and select an optimum pattern from the patterns of group candidates according to a prescribed criterion.

15. The vehicle ride share assist system according to claim 12, wherein the operation scheduling unit is configured to select vehicles to be used for ride share according to the vehicle information stored in the vehicle information managing unit, to select a driver for each selected vehicle, to create a plurality of patterns of group candidates, each group candidate including a driver and zero or more passengers, and to evaluate and select an optimum pattern from the patterns of group candidates according to a prescribed criterion.
